(19)

Europäisches Patentamt

European Patent Office

Office européen des brevets

(11) **EP 2 312 383 A1**

(12) **EUROPÄISCHE PATENTANMELDUNG**

(43) Veröffentlichungstag:
20.04.2011 Patentblatt 2011/16

(51) Int Cl.:
*G02F 1/13357* (2006.01)     *G02B 5/02* (2006.01)
*G02B 27/09* (2006.01)     *G02B 27/00* (2006.01)

(21) Anmeldenummer: 10186954.3

(22) Anmeldetag: 08.10.2010

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **09.10.2009 EP 09012789**

(71) Anmelder: **Bayer MaterialScience AG
51368 Leverkusen (DE)**

(72) Erfinder:
• **Pudleiner, Heinz
47800 Krefeld (DE)**
• **Walze, Günther
Taipei 110 (TW)**
• **Lyding, Andreas
47057 Duisburg (DE)**

(54) **LED-Beleuchtungseinheit mit strukturierter Streufolie**

(57)     Die vorliegende Erfindung betrifft eine LED-Beleuchtungseinheit enthaltend eine Streufolie aus wenigstens einem transparenten Kunststoff, welche wenigstens auf der Vorderseite lichtlenkende Strukturen aufweist.

EP 2 312 383 A1

**Beschreibung**

Die vorliegende Erfindung betrifft eine LED-Beleuchtungseinheit enthaltend eine Streufolie aus wenigstens einem transparenten Kunststoff, welche wenigstens auf der Vorderseite lichtlenkende Strukturen aufweist.

Grundsätzlich weist eine Leuchtdioden (LED)-Beleuchtugnseinheit mit Direkt-Hinterleuchtung den nachfolgend beschriebenen Aufbau auf. Sie umfasst in der Regel ein Gehäuse, in dem je nach Größe und Anwendungsgebiet der Beleuchtungseinheit eine unterschiedliche Anzahl an LED's untergebracht sind. Das Gehäuse kann ein Kasten mit einer flachen Vorder- und Rückseite, sowie beliebig geformten Seitenflächen sein; komplexere Aufbauten können Seitenflächen, welche innen und außen unterschiedliche Formen haben, aufweisen. Meist sind die LEDs innen auf der Rückseite des Kastens plaziert und in einem regelmäßigen Gitter angeordnet. Dieses Gitter lässt sich über die Anzahl der Zeilen in Längs (n) und Querrichtung (m) beschreiben. Die Anzahl der Zeilen repräsentiert durch die Variablen "n" und "m" sind dabei Zahlen jeweils größer oder gleich 1. Die innere Gehäuserückseite zwischen den LED's ist mit einer vorzugsweise weißen diffus lichtreflektierenden Oberfläche ausgestattet. Auf diesem Beleuchtungssystem liegt meist eine Diffuserfolie bzw. -platte auf, die eine Dicke von 1 bis 3 mm, bevorzugt eine Dicke von 1.5 bis 2.5 mm aufweisen kann. Diese Diffuserfolie soll das Licht gleichmäßig streuen, so dass das Punktmuster der LED Matrix verwischt und eine möglichst homogenes Erscheinungsbild erzielt werden kann. Der Abstand der Folie zu der LED Matrix und damit die Gehäusetiefe wird in der Regel so gewählt dass eine möglichst homogene Ausleuchtung gewährleistet ist. Der Rahmen der Leuchteinheit, der die Matrix mit den LEDs umschließt, ist entweder als einfacher Kasten ausgelegt oder weist eine lichtlenkende Freiform auf. Er kann von innen weiß diffus reflektierend oder metallisch reflektierend ausgelegt sein.

Aus dem Stand der Technik sind lichtstreuende transluzente Erzeugnisse aus Polycarbonat mit verschiedenen lichtstreuenden Zusatzstoffen und daraus hergestellte Formteile bereits bekannt.

So offenbart beispielsweise EP-A 634 445 lichtstreuende Zusammensetzungen, welche polymere Partikel auf Vinyl-Acrylat-Basis mit einer Kern/Schale Morphologie in Kombination mit $TiO_2$ enthalten.

Die Verwendung von lichtstreuenden Polycarbonatfolien in Flachbildschirmen ist in US-A 2004/0066645 beschrieben. Als lichtstreuende Pigmente werden hier Polyacrylate, PMMA, Polytetrafluoroethylene, Polyalkyl-trialkoxysiloxane und Mischungen aus diesen Komponenten genannt.

In DE-A 10 2005 039 413 werden PC-Diffuserplatten beschrieben, die 0,01% bis 20% Streupigment enthalten.

Mit solche Diffuserfolien oder -platten kann in LED-Beleuchtungseinheiten aber keine ausreichende Homogenität der Lichtverteilung erzielt werden und die einzelnen LEDs sind weiterhin als diskrete Lichtquellen erkennbar.

Eine Homogenisierung der Lichtverteilung mittels Oberflächenstrukturen ist beispielsweise in JP-A 2006/284697 oder US 2006/10262666 beschrieben. Als Oberflächenstrukturierung liegen hierbei einfache tonnen- oder prismenartige Stege oder eine Kombination derselben zugrunde, die unter Umständen leichte Variationen wie Einkerbungen enthalten. Mathematisch lassen sich diese Strukturen oft über Ellipsenabschnitte beschreiben und werden in diesem Fall in der Regel als Lenticularstrukturen bezeichnet. Die erreichbare Homogenität ist begrenzt und sogar noch geringer als die erreichbare Homogenität herkömmlicher Diffuserplatten.

In CN-A 1924620 werden lichtlenkende Strukturen in Kunststoff mit Streuadditiv beschrieben, die aus abgeschnittenen Prismen bestehen. Diese Strukturen sollen drei klare Abbilder der Lampen erzeugen und durch das zusätzlich auch innerhalb der Struktur eingesetzte Streuadditiv verbreitert werden, um so eine homogene Hinterleuchtung zu ermöglichen. In dieser Konstellation stört das eingesetzte Streuadditiv allerdings die lichtlenkende Wirkung der Struktur, so dass letztlich keine homogene Hinterleuchtung erreicht werden kann.

In US-A 2007047260, US-A 2006250819 und DE-A 10 2007 033300 werden Compound Parabolic Concentrators auf Streuplatten für Backlight-Units, d.h. indirekte Hinterleutungen beschrieben. Bei BLUs steht allerdings unter anderem eine Erhöhung der Brightness im Vordergrund und bereits an einer vorgelagerten Diffuserplatte oder Diffuserschicht gestreutes Licht wird anschließend durch solche CPC-Strukturen auf einer davor befindlichen Streuplatte bzw. Streuschicht wieder zur Helligkeitsverbesserung gesammelt (collimiert).

Die Aufgabe der vorliegenden Erfindung bestand daher darin, eine LED-Beleuchtungseinheit mit möglichst einfachem Aufbau bereitzustellen, die eine verbesserte Homogenisierung der Lichtverteilung aufweist. Ziel dabei ist es, eine möglichst homogene Ausleuchtung zu erreichen bei der die einzelnen Lichtquellen vom menschlichen Auge nicht mehr als diskrete Lichtquellen wahrgenommen werden.

Die Erfindung betrifft daher eine Beleuchtungseinheit enthaltend

- wenigstens eine lichtreflektierende Fläche

- eine oder mehrerer lichtemittiernde Diode(n) (LED(s))

- wenigstens eine Streufolie aus wenigstens einem transparenten Kunststoff wobei das oder die LED(s) vor wenigstens einer reflektierenden Fläche und hinter wenigstens einer Streufolie angeordnet sind, dadurch gekennzeichnet, dass

wenigstens die Vorderseite der Streufolie lichtlenkende Strukturen bestehend aus einem Linsenbereich und einem konvexen CPC-Bereich (Compound Parabolic Concentrator-Bereich) aufweist.

Die erfindungsgemäße Beleuchtungseinheit führt zu deutlich höherer Homogenisierung als herkömmliche Diffuserplatten oder -folien, die ansonsten für solche Beleuchtungseinheiten eingesetzt werden.

Im Rahmen der vorliegenden Erfindung beschreiben die Ausdrücke "Vorderseite" und "Rückseite" die beiden großen gegenüberliegenden Oberflächen der Streufolie. Die Vorderseite ist von der Lichtquelle abgewandt und die Rückseite der Lichtquelle zugewandt.

Im Rahmen der vorliegenden Erfindung bedeutet der Ausdruck "konvexer CPC-Bereich", dass der breitere Teil des CPC's in Richtung Rückseite zeigt.

Im Rahmen der vorliegenden Erfindung bedeutet der Ausdruck "translationsinvariant", dass die Struktur über die Oberfläche in einer Richtung keine oder zumindest keine signifikante oder nachträgliche Variation zeigt, während sie in einer Richtung senkrecht dazu eine Form von länglichen Erhöhungen und Senken aufweist, d.h. eine Rillenstruktur darstellt.

Im Rahmen der vorliegenden Erfindung bedeutet der Ausdruck "übermoduliert", dass eine Struktur entlang der translationsinvarianten Richtung, d.h. entlang der Rillenstruktur eine zusätzliche Variation aufweist, die unabhängig von der Variation quer zur Rillenstruktur ist. Mathematisch betrachtet bildet die effektive Oberflächenstruktur eine Addition der Rillenstruktur mit einer davon unabhängigen im Weiteren als übermoduliert bezeichneten Struktur. Diese übermodulierte Struktur kann ein sinusoidale Funktion sein, eine zufällige Streustruktur oder eine beliebige andere Funktion.

Im Rahmen der vorliegenden Erfindung bedeutet der Ausdruck "Linsenbereich", dass ein Teil der lichtlenkenden Struktur sich mathematisch durch eine linsenartige Funktion beschreiben lässt.

Im Rahmen der vorliegenden Erfindung bedeutet der Ausdruck "CPC-Bereich", dass ein Teil der lichtlenkenden Struktur sich mathematisch durch eine CPC-Funktion beschreiben lässt.

Im Rahmen der vorliegenden Erfindung bedeutet der Ausdruck "identisch", dass alle Linsenbereiche eine identische Form aufweisen und alle CPC Bereiche eine identische Form aufweisen, d.h. durch die gleichen Parameter beschrieben werden können.

Im Rahmen der vorliegenden Erfindung bedeutet der Ausdruck "abhängig", dass benachbarte Linsenbereiche bzw. CPC-Bereiche eine Form aufweisen, die zwar unterschiedlich sein kann, jedoch durch den jeweils benachbarten Bereich vorgegeben ist, also von diesem abhängig ist. Mit diesem Ausdruck werden Strukturen beschrieben, die insgesamt unterschiedliche Formen aufweisen, aber dennoch periodisch wandelbar sind.

Im Rahmen der vorliegenden Erfindung bedeutet der Ausdruck "unabhängig", dass benachbarte Linsenbereiche bzw. CPC-Bereiche eine Form aufweisen, deren beschreibende Parameter gänzlich unabhängig voneinander sind. Jede der einzelnen Strukturen kann dabei eine andere Form ausweisen.

Die lichtlenkenden Strukturen werden im Weiteren auch ACPC (Advanced Compound Parabolic Concentrator) genannt.

Die lichtlenkenden Strukturen sind bevorzugt translationsinvariant.

Die Linsenbereiche und CPC-Bereiche können jeweils identisch, abhängig oder unabhängig sein. In einer Ausführungsform sind alle Linsenbereiche identisch und alle CPC-Bereiche identisch.

Die einzelnen Linsenbereiche und CPC-Bereiche können weiterhin durch unabhängige Parametersätze beschrieben werden.

Der CPC-Bereich kann bestimmt werden und wird bevorzugt bestimmt durch:

a) Berechnen der Öffnungswinkel im Medium $\theta_1$ und $\theta_2$ aus den Fresnelschen Gleichungen mittels der definierten Akzeptanzwinkel;

b) Konstruktion des Parabelastes $P_1$ mit dem Öffnungswinkel im Medium $\theta_1$ und des Parabelastes $P_2$ mit dem Öffnungswinkel im Medium $\theta_2$ gemäß der Gleichung:

$$y_{1,2} = \frac{\left(x \mp \cos\theta_{1,2}\right)^2}{2\left(1 \mp \sin\theta_{1,2}\right)} - \frac{1 \pm \sin\theta_{1,2}}{2}$$

Wobei $\theta_{1,2}$ der Öffnungswinkel im Medium der linken ($\theta_1$) und rechten ($\theta_2$) Parabel, x die X-Koordinate, und $y_{1,2}$ die die Y-Koordinate der linken ($y_1$) und rechten ($y_2$) Parabel ist;

c) Berechnung der Endpunkte der Parabeläste $F_1$, $F_2$ und $E_1$, $E_2$ ;

d) Drehung des Parabelastes $P_1$ um den Öffnungwinkel im Medium -$\theta_1$ und des Parabelastes $P_2$ um den Öffnungswinkel im Medium $\theta_2$ und Translation der Parabelastes $P_2$ längs der x-Achse;

e) optional im Falle einer asymmetrischen Variante mit $\theta_1 \neq \theta_2$ Bestimmung der Neigung der durch die Punkte $E_1$ und $E_2$ bestimmten Neigungsfläche;

f) Bestimmung der effektiven Akzeptanzwinkel in Luft aus der in den Schritten a) bis e) konstruierten Geometrie;

g) Vergleich der effektiven Akzeptanzwinkel mit den definierten Akzeptanzwinkeln, und bei Abweichung größer 0,001% Wiederholung von Schritt a) bis f) mit korrigierten Akzeptanzwinkeln anstelle der definierten Akzeptanzwinkel in Schritt a), wobei die korrigierten Akzeptanzwinkeln ungleich sind den definierten Akzeptanzwinkeln, und wobei die korrigierten Akzeptanzwinkel so gewählt werden, dass die effektiven Akzeptanzwinkel aus Schritt f) mit den definierten Akzeptanzwinkeln übereinstimmen; und

h) beim Erreichen einer Abweichung der effektiven Akzeptanzwinkel von den definierten Akzeptanzwinkeln von 0,001% oder weniger Verkürzung der Parabeln in y-Richtung auf das durch den Verkürzungsfaktor bestimmte Maß.

In einer Ausführungsform der Erfindung ist der definierte Akzeptanzwinkel $\theta_1$ zwischen 5° und 60° und der definierte Akzeptanzwinkel $\theta_2$ zwischen 5° und 60° liegen.

In einer weiteren Ausführungsform ist in Schritt h) die Verkürzung ein einfaches Abschneiden.

In einer weiteren Ausführungsform ist in Schritt h) die Verkürzung eine Stauchung der Geometrie entlang der y-Achse um den durch den Verkürzungsfaktor bestimmten Faktor.

In einer weiteren bevorzugten Ausführungsform ist $\theta_1 = \theta_2$.

In einer weiteren Ausführungsform ist der Querschnitt der Linse eine Ellipse.

In einer weiteren Ausführungsform liegt die Gesamtperiode in einem Bereich zwischen 10 $\mu$m und 1mm, bevorzugt 30 $\mu$m - 500 $\mu$m, besonders bevorzugt 50 $\mu$m - 300 $\mu$m.

In einer weiteren Ausführungsform weist der CPC-Bereich einen stetig polynomischen Abschluss auf. Dies bedeutet, dass sich die Struktur zwischen den beiden Punkten F1 und F2 eines CPC-Bereichs durch eine stetige polynomische Funktion beschreiben lässt. In einer Ausführungsform ist die polynomische Funktion ein Polynom n-ter Ordnung, wobei n kleiner oder gleich 32 ist. In einer weiteren Ausführungsform ist die polynomische Funktion ein Polynom vierter Ordnung, der stetig differenzierbar in den Punkten $F_1$ und $F_2$ ist.

In einer weiteren Ausführungsform lässt sich die Struktur zwischen den beiden Punkten F1 und F2 eines CPC-Bereichs durch eine Parabel, Hyperbel, Kreisfunktion, Sinosoidalfunktion oder Gerade beschreiben.

In einer weiteren Ausführungsform weichen die Bereiche weniger als 5% oder zumindest weniger als 10% von einer der vorhergehend beschriebenen Geometrien ab.

In einer weiteren Ausführungsform bedecken die Strukturen mindestens 80%, mindestens 90%, mindestens 95% oder 100% der Oberfläche der Vorderseite.

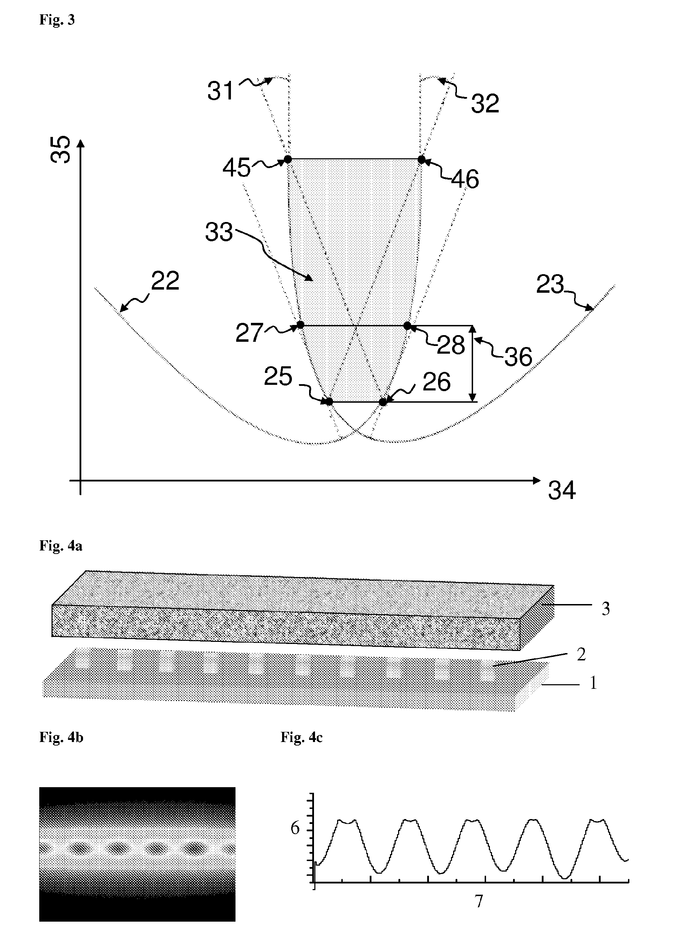

Der CPC Bereich folgt dem Design eines klassischen dielektrischen CPC (compound parabolic concentrator) mit dem Unterschied eines stetigen polynomischen Abschlusses (Polynom). Dielektrische CPCs werden klassischerweise als Konzentratorsysteme eingesetzt und basieren - im Gegensatz zu noch länger bekannten metallischen CPCs - auf dem optischen Prinzip der internen Totalreflektion. Zur mathematischen Bestimmung des CPC in der hier verwendeten Form sind die bestimmenden Parameter die beiden - hier meist identischen - Akzeptanzwinkel sowie der Verkürzungsfaktor. CPCs (Figur 3) werden nach folgender Vorgehensweise mit den genannten Formeln konstruiert. Bei der beschriebenen Vorgehensweise handelt es sich um ein implizites Optimierungsproblem:

1. Berechnen der Öffnungwinkel im Medium $\theta_1$ und $\theta_2$ (31 und 32) aus den Fresnelschen Gleichungen mittels der definierten Akzeptanzwinkel.

2. Konstruktion des Parabelastes $P_1$ (22) mit dem Öffnungswinkel im Medium $\theta_1$ (31) und des Parabelastes $P_2$ (23) mit dem Öffnungswinkel im Medium $\theta_2$ (32) gemäß der Gleichung:

$$y_{1,2} = \frac{(x \mp \cos\theta_{1,2})^2}{2(1 \mp \sin\theta_{1,2})} - \frac{1 \pm \sin\theta_{1,2}}{2}$$

3. analytische Berechnung der Endpunkte der Parabeläste $F_1$, $F_2$ und $E_1$, $E_2$ (25, 26, 45, 46)

4. Drehung des Parabelastes $P_1$ um den Öffnungswinkel im Medium -$\theta_1$ und des Parabelastes $P_2$ um den Öffnungswinkel im Medium $\theta_2$ und Translation der Parabel $P_2$ längs der x-Achse.

5. Im Falle der assymetrischen Variante mit $\theta_1 \neq \theta_2$ (31 und 32) wird nun die Neigung der durch die Punkte $E_1$ und $E_2$ bestimmten Neigungsfläche bestimmt.

6. Aus der Konstruktion werden die effektiven Akzeptanzwinkel in Luft bestimmt.

7. Vergleich mit den gewünschten Akzeptanzwinkeln. Bei zu geringer Übereinstimmung erneutes beginnen bei Punkt 1 mit angepassten Akzeptanzwinkeln.

8. Bei ausreichender Genauigkeit Verkürzung - einfaches Abschneiden - der Parabeln in y-Richtung auf das durch den Verkürzungsfaktor (36) bestimmte Maß mit den neuen Endpunkten $E_3$ und $E_4$ (27 und 28)

9. Ersetzen der durch die Punkte $F_1$ und $F_2$ (25, 26) begrenzten Kante durch eine Polynom n-ter Ordnung, das stetig differenzierbar angeschlossen wird.

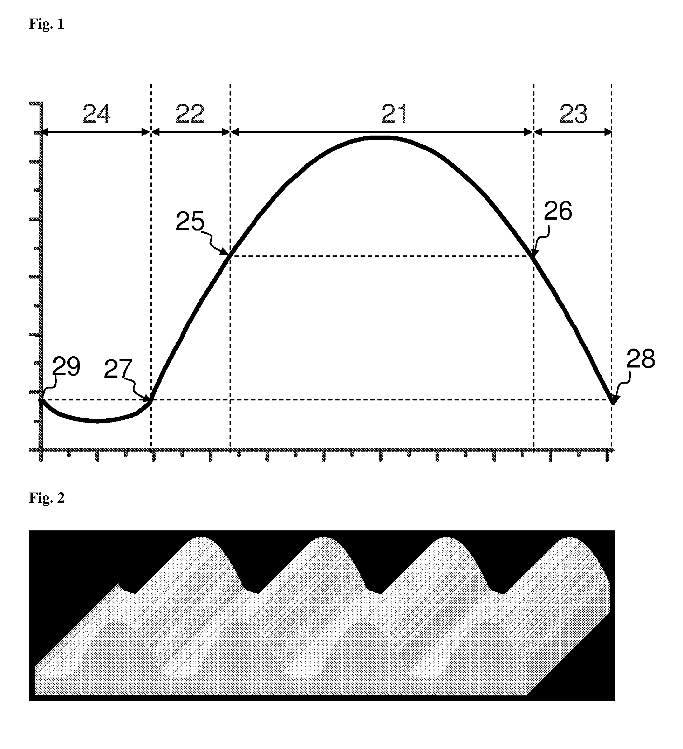

Im vorliegenden Fall werden die CPCs abweichend ihrer ursprünglichen Funktion eingesetzt. Passt man einen CPC so an, dass sein Akzeptanzwinkel $\theta_1$ und $\theta_2$ (Figur 3) knapp unterhalb des Einfallswinkels des Lichtes auf die Diffuserplatte im Bereich zwischen zwei Lampen liegt, erhält man an dieser frei definierbaren Stelle eine Leuchtdichteerhöhung. Der so definierte CPC bestimmt den Bereich zwischen den Punkten 25 und 27 sowie zwischen den Punkten 26 und 28 in der Figur 1. Die CPCs können entweder symmetrisch mit den gleichen Öffnungswinkeln $\theta_1 = \theta_2$ oder asymmetrisch mit unterschiedlichen Öffnungswinkeln $\theta_1 \neq \theta_2$ ausgestattet sein.

Der Bereich Polynom zwischen den Punkten 25 und 26 in Figur 1 ist eine stetig angepasste Funktion. Diese kann ein Polynom n-ter Ordnung sein, ein Kreisausschnitt, eine Ellipse, ein Sinusoidale Funktion, eine Parabel, eine Linse oder eine Gerade. Bevorzugt ist es ein Polynom n-ter Ordnung. Besonders bevorzugt ist es ein Polynom vierter Ordnung, der stetig differenzierbar in den Punkten 25 und 26 ist.

Das Polynom zwischen den Punkten 25 und 26, in Kombination mit dem Linsenbereich (Lens) zwischen den Punkten 29 und 27 bestimmt Höhe und Breite eines Maximums im Bereich direkt über den Lampen. Die Leuchtdichte ist hier bei ebener Fläche in einem kleinen räumlichen Bereich sehr hoch, fällt aber steil ab. Die Zerstreuungswirkung der Linse in diesem Bereich führt zu einer Aufweitung und gleichzeitigen Absenkung dieses Maximums. Über die Krümmung des Bereiches lässt sich diese Aufweitung kontrollieren. Der bestimmende Parameter ist hier der normierte Fokus der Zerstreuungslinse. Die Linse kann nach folgenden Formeln berechnet werden: Sinusoidal, Polynom n-ter Ordnung, Parabel, Hyperbel, Ellipse, Kreis, Kreisbogenausschnitt, Gerade. Bevorzugt ist eine Ellipse.

Der letzte Konstruktionsparameter ist das Verhältnis (Ratio) der beiden Teilbereiche 24 sowie die Summe aus 21, 22 und 23 zueinander. Über dieses Verhältnis lassen sich die Maxima zwischen den Lampen und direkt oberhalb der Lampen auf ein identisches Leuchtdichteniveau bringen. Je nachdem welche Funktion im Bereich Polynom verwendet wird, muss eine entsprechende Funktion im Bereich Lens verwendet werden. Bevorzugte Kombinationen sind in folgender Tabelle zusammengefasst:

| Lens | Polynom |
| --- | --- |
| Polynom n-ter Ordnung | Polynom n-ter Ordnung |
| Polynom n-ter Ordnung | sinusoidal |
| Gestauchter Kreis | Polynom n-ter Ordnung |

Durch eine Verdreifachung der Maxima im Vergleich zu einer Verdoppelung bei der herkömmlichen Lenticularstruktur ist die Homogenisierungswirkung im gleichen System ungleich größer. Zudem lässt sich die Position der Maxima, sowie ihre Breite und maximale Intensität getrennt voneinander anpassen. Dadurch ist die erfindungsgemäße Struktur auch für anspruchsvolle LED-Beleuchtungseinheiten (z.B. weniger Lampen, dünnere Aufbauten) geeignet.

Die Struktur lässt sich über wenige Parameter mathematisch exakt beschreiben und auf das jeweilige Design der LED-Beleuchtungseinheit anpassen. Dadurch ist eine sehr homogene Ausleuchtung möglich. Des Weiteren ist im Gegensatz zu herkömmlichen Systemen auf der Basis von Volumenstreuung der Effekt unabhängig von der Dicke der Streufolie, was einen zusätzlichen Freiheitsgrad in der Konstruktion bietet.

Die Erfindung wird durch die Abbildungen (Fig. 1 bis Fig. 10) weiter illustriert:

Fig. 1: Querschnitt durch eine lichtlenkende Struktur

Fig. 2: dreidimensionale Illustration einer lichtlenkenden Struktur

Fig. 3: Konstruktionsprinzip eines Compound Parabolic Concentrators

Fig. 4a: Schematischer Aufbau einer Beleuchtungseinheit gemäß Vergleichsbeispiel

Fig. 4b: Helligkeitsvariation der Beleuchtungseinheit gemäß Vergleichsbeispiel gemessen mit einer CCD Kamera

Fig. 4c: Helligkeitsvariation der Beleuchtungseinheit gemäß Vergleichsbeispiel

Fig. 5a: Schematischer Aufbau einer Beleuchtungseinheit gemäß erfindungsgemäßem Beispiel 2

Fig. 5b: Helligkeitsvariation der Beleuchtungseinheit gemäß erfindungsgemäßem Beispiel 2 gemessen mit einer CCD Kamera

Fig. 5c: Helligkeitsvariation der Beleuchtungseinheit gemäß erfindungsgemäßem Beispiel 2

Fig. 6a: Schematischer Aufbau einer Beleuchtungseinheit gemäß erfindungsgemäßem Beispiel 3

Fig. 6b: Helligkeitsvariation der Beleuchtungseinheit gemäß erfindungsgemäßem Beispiel 3 gemessen mit einer CCD Kamera

Fig. 6c: Helligkeitsvariation der Beleuchtungseinheit gemäß erfindungsgemäßem Beispiel 3

Hierbei bedeuten die Referenzzeichen:

1    lichtreflektierende Fläche

2    LEDs

3    Diffuserplatte

4    Streufolie mit lichtlenkender Struktur

5    Diffuserfolie

6    Leuchtdichte

7    Abstand

21    Polynombereich der lichtlenkenden Struktur

22    linker CPC-Bereich (Parabel $P_1$) der lichtlenkenden Struktur

23    rechter CPC-Bereich (Parabel $P_2$) der lichtlenkenden Struktur

24    Linsen-Bereich (Lens-Bereich) der lichtlenkenden Struktur

25    Oberer Endpunkt $F_1$ des CPC

26    Oberer Endpunkt $F_2$ des CPC

27    Unterer Endpunkt $E_3$ des CPC

28    Unterer Endpunkt $E_4$ des CPC

29    linker Endpunkt $L_1$ des Lens-Bereiches

31    Öffnungswinkel $\theta_1$ der Parabel $P_1$

32    Öffnungswinkel $\theta_2$ der Parabel $P_2$

33    CPC Körper

34    X-Koordinate

35    Y-Koordinate

36    Durch den Abschneidefaktor bestimmte Verkürzung des CPC Körpers

45    Unterer Endpunkt $E_1$ des unverkürzten CPC

46    Unterer Endpunkt $E_2$ des unverkürzten CPC

In einer weiteren Ausführungsform weist die Streufolie auf der Rückseite eine Oberflächenstruktur mit Streuwirkung auf.

In einer weiteren Ausführungsform weist die Streufolie auf der Rückseite eine UV-absorbierende Schicht auf.

In einer weiteren Ausführungsform weist die Streufolie in der translationsinvarianten Richtung übermodulierte Strukturen auf, die eine zusätzliche Streuwirkung erzielen.

Die erfindungsgemäß eingesetzten Streufolien enthalten bevorzugt wenigstens einen transparenten thermoplastischen Kunststoff.

Bei dem thermoplastischen Kunststoff kann es sich bevorzugt um wenigstens einen thermoplastischen Kunststoff ausgewählt aus Polymerisaten von ethylenisch ungesättigten Monomeren und/oder Polykondensaten von bifunktionellen reaktiven Verbindungen und/oder Polyadditionaprodukten von bifunktionellen reaktiven Verbindungen, bevorzugt um wenigstens einen thermoplastischen Kunststoff ausgewählt aus Polymerisaten von ethylenisch ungesättigten Monomeren und/oder Polykondensaten von bifunktionellen reaktiven Verbindungen handeln.

Besonders geeignete thermoplastische Kunststoffe sind Polycarbonate oder Copolycarbonate auf Basis von Diphenolen, Poly- oder Copolyacrylate und Poly- oder Copolymethacrylate wie beispielhaft und vorzugsweise Polymethylmethacrylat bzw. Poly(meth)acrylat (PMMA), Poly- oder Copolymere mit Styrol wie beispielhaft und vorzugsweise Polystyrol oder Polystyrolacrylnitril (SAN), thermoplastische Polyurethane, sowie Polyolefine, wie beispielhaft und vorzugsweise Polypropylentypen oder Polyolefine auf der Basis von cyclischen Olefinen (z.B. TOPAS®, Hoechst), Poly- oder Copolykondensate der Terephthalsäure, wie beispielhaft und vorzugsweise Poly- oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT) oder Mischungen aus den vorangehend genannten. Polyolefine, wie z.B. Polypropylen, ohne Zusatz anderer vorangehend genannter thermoplastischer Kunststoffe sind allerdings für das erfindungsgemäße Verfahren weniger bevorzugt.

Bevorzugte thermoplastische Kunststoffe sind Polycarbonate oder Copolycarbonate, Poly- oder Copolyacrylate, Poly- oder Copolymethacrylate, Polystyrol, Poly- oder Copolykondensate der Terephthalsäure oder Blends enthaltend wenigstens einen dieser thermoplastischen Kunststoffe. Besonders bevorzugt sind Polycarbonate oder Copolycarbonate, insbesondere mit mittleren Molekulargewichten $M_w$ von 500 bis 100 000, bevorzugt von 10 000 bis 80 000, besonders bevorzugt von 15 000 bis 40 000 oder Blends enthaltend diese.

Bevorzugt hat die Streufolie eine Transmission größer 90%, insbesondere größer 95%.

Die erfindungsgemäß verwendete Streufolie kann durch Extrusion hergestellt werden.

In bestimmten Fällen erhöht eine zusätzliche Oberflächenstruktur mit Streuwirkung auf der Vorderseite und/oder der Rückseite den Effekt der verbesserten Homogenisierung der Lichtverteilung noch.

Die erfindungsgemäß eingesetzten Streufolien mit den lichtlenkenden ACPC Strukturen können durch Extrusion, Spritzguss, Spritzprägen, Heißprägen, Kaltprägen oder Hochdruckverformung hergestellt werden, bevorzugt durch Extrusion. Bei der Extrusion ist die erfindungsgemäße Struktur in einer der Walzen vorhanden. Die Struktur kann durch Ultrapräzisionsfräsen, Laserbearbeitung, chemische Strukturierung, Photolithographie oder anderen dem Fachmann bekannten Technologien auf die Walze aufgebracht werden.

Die Streufolien können weiterhin mehrere Schichten aufweisen, eine Mittelschicht und gegebenenfalls weitere Schichten auf der Vorderseite und/oder auf der Rückseite.

Die Streufolie weist bevorzugt eine Dicke von 50 bis 1000 $\mu$m, besonders bevorzugt von 50 bis 700 $\mu$m, ganz besonders bevorzugt von 100 bis 600 $\mu$m, und insbesondere von 250 bis 500 $\mu$m auf. Dabei ist unter der Dicke der Streufolie der Abstand zwischen der Rückseite und der maximalen Ausdehnung der Struktur auf der Vorderseite der Streufolie zu verstehen.

In einer bevorzugten Ausführungsform enthält die erfindungsgemäße Beleuchtungseinheit wenigstens eine Diffuserfolie, die Streuteilchen enthält und vor der Streufolie, d.h. vor deren Vorderseite mit den lichtlenkende Strukturen bestehend aus einem Linsenbereich und einem konvexen CPC-Bereich, angeordnet ist. Vorzugsweise handelt es sich bei einer solchen Diffuserfolie um eine solche basierend auf einem Kunststoff, vorzugsweise einem transparenten Kunststoff, als Basismaterial, die in dieses Basismaterial eingebettet Streuteilchen aufweist.

Die Streuteilchen können polymere oder anorganische Teilchen sein. Als Streuteilchen kommen eine Vielzahl unterschiedlicher Stoffe in Frage, wie z.B. anorganische oder organische Materialien. Diese können weiterhin in fester, flüssiger oder auch gasförmiger Form vorliegen.

Beispiele für anorganische Stoffe sind z.B. salzartige Verbindungen wie Titandioxid, Zinkoxid, Zinksulfid, Bariumsulfat etc. aber auch amorphe Materialien wie anorganische Gläser.

Beispiele für organische Stoffe sind Polyarylate, Polymethacrylate, Polytetrafluoroethylen, Polytrialkyloxysiloxane. Die Streuteilchen können polymere Teilchen auf Acrylatbasis mit einer Kern-Schale-Morphologie sein. Es handelt sich dabei beispielsweise und bevorzugt um solche, wie sie in EP-A 634 445 offenbart werden.

Beispiele für gasförmige Materialien können Inertgase wie Stickstoff, Edelgase aber auch Luft oder Kohlendioxid sein. Sie werden unter Druck in der Polymerschmelze "gelöst" und zur Streufolie z. B. durch Extrusionsverfahren verarbeitet. Beim Abkühlen/Entspannen der Folie bilden sie dann Gasblasen.

Diese Streuteilchen können weiterhin unterschiedlichste Geometrien aufweisen, von kugeliger Form bis hin zu geometrischen Formen, wie sie Kristalle darstellen. Übergangsformen sind ebenfalls möglich. Es ist ferner möglich, dass diese Streuteilchen über ihren Querschnitt unterschiedliche Brechungsindices besitzen, z.B. resultierend aus Beschichtungen der Streuteilchen oder resultierend aus Kern-Schale-Morphologien.

Die Streuteilchen sind nützlich, um dem transparenten Kunststoff, in den sie eingebettet sind, Lichtstreueigenschaften zu erteilen. Der Brechungsindex n der Streuteilchen liegt bevorzugt innerhalb von +/-0,25 Einheiten, mehr bevorzugt innerhalb +/-0,18 Einheiten, am meisten bevorzugt innerhalb +/-0,12 Einheiten des Brechungsindexes des transparenten Kunststoffs. Der Brechungsindex n der Streuteilchens liegt bevorzugt nicht näher als +/-0,003 Einheiten, mehr bevorzugt nicht näher als +/-0,01 Einheiten, am meisten bevorzugt nicht näher als +/-0,05 Einheiten bei dem Brechungsindex des transparenten Kunststoffs. Der Brechungsindex wird entsprechend der Norm ASTM D 542-50 und/oder DIN 53 400 gemessen.

Die Streuteilchen haben im Allgemeinen einen Durchschnittsteilchendurchmesser von wenigstens 0,5 $\mu$m, bevorzugt von wenigstens 2 $\mu$m, mehr bevorzugt von 2 bis 50 $\mu$m, am meisten bevorzugt von 2 bis 15 $\mu$m. Unter "Durchschnittsteilchendurchmesser" ist der Zahlendurchschnitt zu verstehen. Bevorzugt haben wenigstens 90 %, am meisten bevorzugt wenigstens 95 % der Streuteilchen einen Durchmesser von mehr als 2 $\mu$m. Die Streuteilchen sind bevorzugt ein frei fließendes Pulver.

Die Streuteilchen im Basismaterial werden vorzugsweise in einer Menge von 0.001 bis 10 Gew.-% bevorzugt von 0.01 bis 5 Gew.-%, bezogen auf das Gesamtgewicht des Basismaterials, eingesetzt.

In einer weiteren bevorzugten Ausführungsform enthält die erfindungsgemäße Beleuchtungseinheit wenigstens zwei, bevorzugt zwei der Streufolien, welche jeweils auf der Vorderseite lichtlenkende Strukturen bestehend aus einem Linsenbereich und einem konvexen CPC-Bereich aufweisen, wobei die zweite Streufolie mit der Rückseite vor der Vorderseite der ersten Streufolie angeordnet ist und die lichtlenkenden Strukturen der zweiten Streufolie gegenüber der lichtlenkenden Strukturen der ersten Streufolie, d.h. die Ausrichtung der Rillenstruktur der ersten Streufolie gegenüber der Rillenstruktur der zweiten Streufolie, bevorzugt um einen Winkel zwischen 30 und 150°, besonders bevorzugt zwischen 60 und 120°, ganz besonders bevorzugt um 90° gedreht angeordnet sind.

Die vorangehend genannten bevorzugten Ausführungsformen der erfindungsgemäßen Beleuchtungseinheit zeigen eine signifikant verbesserte Homogenisierung der Lichtverteilung.

Die erfindungsgemäße Beleuchtungseinheit weist bevorzugt einen Lichtkasten, d.h. ein Gehäuse auf, welcher die lichtreflektierende Fläche, die LED(s), Streufolie(n) und gegebenenfalls Diffuserfolie(n) aufnimmt. Dabei kann es sich um einen Kasten mit einer flachen Vorder- und Rückseite sowie beliebig geformten Seitenflächen sein; komplexere Aufbauten können Seitenflächen, welche innen und außen unterschiedliche Formen haben, aufweisen. Vorzugsweise stellt die Bodenplatte dieses Lichtkastens eine bzw. die lichtreflektierende Fläche dar. Besonders bevorzugt ist der Lichtkasten hierzu diffus reflektierend oder metallisch reflektierend, ganz besonders bevorzugt weiß diffus reflektierend ausgelegt. Hierzu kann die Bodenplatte alleine oder sowohl Bodenplatte als auch die Seitenflächen des Lichtkastens von innen diffus reflektierend oder metallisch reflektierend, ganz besonders bevorzugt weiß diffus reflektierend ausgelegt sein.

Die lichtreflektierende(n) Fläche(n) können vorzugsweise diffus reflektierend oder metallisch reflektierend sein, besonders bevorzugt ist/sind sie weiß diffus reflektierend.

Die LEDs sind vorzugsweise innen auf der Rückseite des Lichtkastens plaziert und können in einem regelmäßigen Gitter oder unregelmäßig angeordnet sein. Bei den LEDs kann es sich um punktförmige oder strichförmige Lichtquellen handeln. Für den Fall der Anordnung in einem regelmäßigen Gitter, lässt sich dieses Gitter über die Anzahl der Zeilen in Längs (n) und Querrichtung (m) beschreiben. Die Anzahl der Zeilen repräsentiert durch die Variablen "n" und "m" sind dabei ganze Zahlen jeweils größer oder gleich 1.

Die nachfolgenden Beispiele dienen der exemplarischen Erläuterung der Erfindung und sind in keiner Weise als limitierend aufzufassen.

**Beispiele:**

Beispiel 1 (Vergleichsbeispiel, nicht erfindungsgemäß):

Eine Beleuchtungseinheit mit einem Reflektor und 6 linear angeordneten Leuchtdioden (LED) mit einem LED Mittelpunktsabstand von 50 mm und einem Abstand der LED's zum Diffuser von 15 mm wurde vorgelegt. Hierbei wurde eine übliche Diffuser-Platte verwendet: Als Diffuserplatte wurde eine Acrylat-Standard-Diffuser-Platte von Sumitomo Chemical, Sumipex® FX 151 verwendet. Der Aufbau dieser nicht erfindungsgemäßen Beleuchtungseinheit ist in Figur 4a gezeigt. Die Helligkeitsvariation (Standardabweichung) über den Lampen betrug 33 %. Die Helligkeitsvariation ist als linearer Schnitt durch die Mittelpunkte der LED's in Fig. 4c dargestellt. Für das menschliche Auge entstand der Eindruck eindeutig unterscheidbarer punktförmiger Lichtquellen. Die Helligkeitsvariation die als Ausgangspunkt für die Messung aus Fig. 4c diente, wurde mit einer CCD Kamera der Fa. Firma: STARLIGHT XPRESS Ltd., Modell SXVF-H9 gemessen und ist in Fig. 4b dargestellt.

Beispiel 2 (erfindungsgemäß):

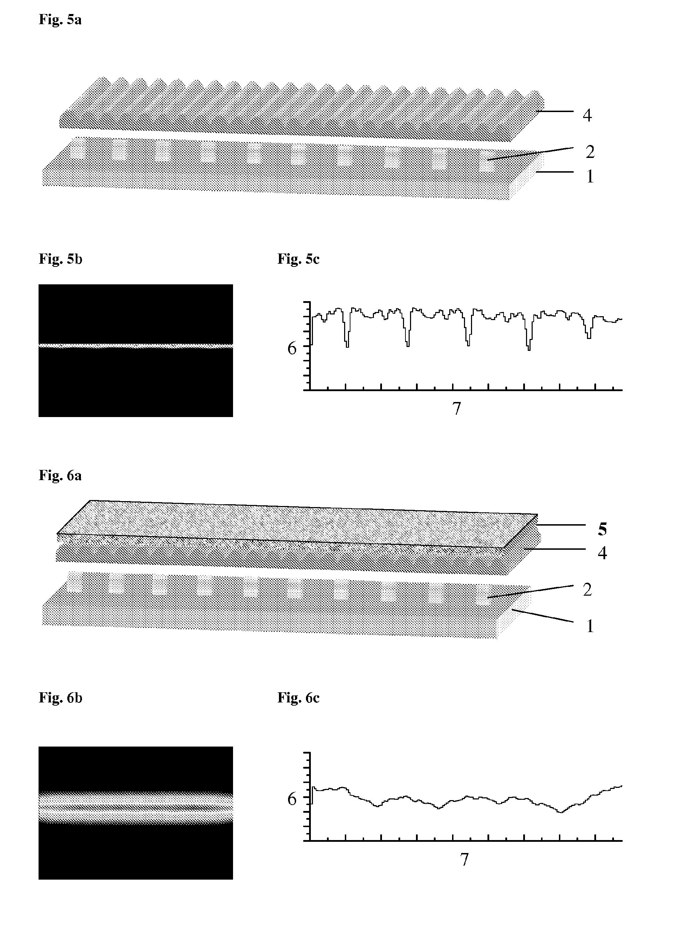

Eine Beleuchtungseinheit mit einem Reflektor und 6 linear angeordneten Leuchtdioden (LED) mit einem LED Mittelpunktsabstand von 50 mm und einem Abstand der LED's zum Diffuser von 15 mm wurde vorgelegt. Als Diffuser wurde eine 280 $\mu$m dicke Streufolie mit einer ACPC-Struktur mit folgenden Parametern aufgelegt: Akzeptanzwinkel: 40°, Verkürzungsfaktor: 0,1, Polymer: Polycarbonat auf Basis von Bisphenol A (Makrolon® 3108 (hochviskoses BPA-PC, MFR 6,5 g/10min nach ISO 1133 bei 300°C und 1,2 kg)), Lensstruktur: gerade (flach), Ratio: 0,03, Polynombereich: Polynom 2. Ordnung. Die lineare Struktur der ACPC-Streufolie war quer (vertikal) zu der LED Anordnung orientiert. Der Aufbau dieser erfindungsgemäßen Beleuchtungseinheit ist in Figur 5a gezeigt. Die Helligkeitsvariation über den Lampen betrug 12 %. Die Helligkeitsvariation ist als linearer Schnitt durch die Mittelpunkte der LED's in Fig. 5c dargestellt. Für das menschliche Auge entstand der Eindruck einer linearen Lichtquelle. Die Helligkeitsvariation die als Ausgangspunkt für die Messung aus Fig. 5c diente wurde mit einer CCD Kamera der Fa. Firma: STARLIGHT XPRESS Ltd., Modell SXVF-H9 gemessen und ist in Figur 5b gezeigt.

Beispiel 3 (erfindungsgemäß):

Eine Beleuchtungseinheit mit einem Reflektor und 6 linear angeordneten Leuchtdioden (LED) mit einem LED Mittelpunktsabstand von 50 mm und einem Abstand der LED's zum Diffuser von 15 mm wurde vorgelegt. Als Diffuser wurde eine 280 $\mu$m dicke Streufolie mit einer ACPC-Struktur mit folgenden Parametern aufgelegt: Akzeptanzwinkel: 40°, Verkürzungsfaktor: 0,1, Polymer: Polycarbonat auf Basis von Bisphenol A (Makrolon® 3108 (hochviskoses BPA-PC, MFR 6,5 g/10min nach ISO 1133 bei 300°C und 1,2 kg)), Lensstruktur: gerade (flach), Ratio: 0,03, Polynombereich: Polynom 2. Ordnung. Die lineare Struktur der ACPC-Streufolie war quer (vertikal) zu der LED Anordnung orientiert. Auf diese wurde eine weitere Streufolie (4 Gew.-% kommerziell erhältliche Kern-Schale-Acrylat-Streupartikel Paraloid® EXL 5137 von der Fa. Rohm & Haas in Makrolon® 3108) einer Dicke von 375 $\mu$m aufgelegt. Der Aufbau dieser erfindungsgemäßen Beleuchtungseinheit ist in Figur 6a gezeigt. Die Helligkeitsvariation über den Lampen betrug 10 %. Die Helligkeitsvariation ist als linearer Schnitt durch die Mittelpunkte der LED's in Fig. 6c dargestellt. Für das menschliche Auge entstand der Eindruck einer verbreiterten linearen Lichtquelle. Die Helligkeitsvariation die als Ausgangspunkt für die Messung aus Fig. 6c diente wurde mit einer CCD Kamera der Fa. Firma: STARLIGHT XPRESS Ltd., Modell SXVF-H9 gemessen und ist in Figur 6c gezeigt.

**Patentansprüche**

1. Beleuchtungseinheit enthaltend

- wenigstens eine lichtreflektierende Fläche

- eine oder mehrerer lichtemittiernde Diode(n) (LED(s))
- wenigstens eine Streufolie aus wenigstens einem transparenten Kunststoff

wobei das oder die LED(s) vor wenigstens einer reflektierenden Fläche und hinter wenigstens einer Streufolie angeordnet sind,
**dadurch gekennzeichnet, dass** wenigstens die Vorderseite der Streufolie lichtlenkende Strukturen bestehend aus einem Linsenbereich und einem konvexen CPC-Bereich (Compound Parabolic Concentrator-Bereich) aufweist.

**2.** Beleuchtungseinheit gemäß Anspruch 1, **dadurch gekennzeichnet, dass** der CPC-Bereich bestimmt werden kann durch:

a) Berechnen der Öffnungswinkel im Medium $\theta_1$ und $\theta_2$ aus den Fresnelschen Gleichungen mittels der definierten Akzeptanzwinkel;
b) Konstruktion des Parabelastes $P_1$ mit dem Öffnungswinkel im Medium $\theta_1$ und des Parabelastes $P_2$ mit dem Öffnungswinkel im Medium $\theta_2$ gemäß der Gleichung:

$$y_{1,2} = \frac{\left(x \mp \cos\theta_{1,2}\right)^2}{2\left(1 \mp \sin\theta_{1,2}\right)} - \frac{1 \pm \sin\theta_{1,2}}{2}$$

wobei $\theta_{1,2}$ der Öffnungswinkel im Medium der linken ($\theta_1$) und rechten ($\theta_2$) Parabel, x die X-Koordinate, und $y_{1,2}$ die Y-Koordinate der linken ($y_1$) und rechten ($y_2$) Parabel ist;
c) Berechnung der Endpunkte der Parabeläste $F_1, F_2$ und $E_1, E_2$ ;
d) Drehung des Parabelastes $P_1$ um den Öffnungwinkel im Medium $-\theta_1$ und des Parabelastes $P_2$ um den Öffnungwinkel im Medium $\theta_2$ und Translation der Parabelastes $P_2$ längs der x-Achse;
e) optional im Falle einer asymmetrischen Variante mit $\theta_1 \neq \theta_2$ der Bestimmung der Neigung der durch die Punkte $E_1$ und $E_2$ bestimmten Neigungsfläche;
f) Bestimmung der effektiven Akzeptanzwinkel in Luft aus der in den Schritten a) bis e) konstruierten Geometrie;
g) Vergleich der effektiven Akzeptanzwinkel mit den definierten Akzeptanzwinkeln, und bei Abweichung größer 0,001% Wiederholung von Schritt a) bis f) mit korrigierten Akzeptanzwinkeln anstelle der definierten Akzeptanzwinkel in Schritt a), wobei die korrigierten Akzeptanzwinkeln ungleich sind den definierten Akzeptanzwinkeln, und wobei die korrigierten Akzeptanzwinkel so gewählt werden, dass die effektiven Akzeptanzwinkel aus Schritt f) mit den definierten Akzeptanzwinkeln übereinstimmen; und
h) beim Erreichen einer Abweichung der effektiven Akzeptanzwinkel von den definierten Akzeptanzwinkeln von 0,001% oder weniger Verkürzung der Parabeln in $\gamma$-Richtung auf das durch den Verkürzungsfaktor bestimmte Maß.

**3.** Beleuchtungseinheit gemäß Anspruch 2, **dadurch gekennzeichnet, dass** sich die Struktur zwischen den beiden Punkten F1 und F2 eines CPC-Bereichs durch eine stetige polynomische Funktion beschreiben lässt.

**4.** Beleuchtungseinheit gemäß wenigstens einem der Ansprüche 1 bis 3, **dadurch gekennzeichnet, dass** die Streufolie wenigstens ein thermoplastisches Polymer enthält.

**5.** Beleuchtungseinheit gemäß wenigstens einem der Ansprüche 1 bis 4, **dadurch gekennzeichnet, dass** diese vor der Streufolie wenigstens eine Diffuserfolie aufweist, die Streuteilchen enthält.

**6.** Beleuchtungseinheit gemäß wenigstens einem der Ansprüche 1 bis 5, **dadurch gekennzeichnet, dass** es sich bei der reflektierenden Fläche um eine diffus lichtreflektierende Fläche, bevorzugt um eine weiße diffus lichtreflektierende Fläche handelt.

**7.** Beleuchtungseinheit gemäß wenigstens einem der Ansprüche 1 bis 6, **dadurch gekennzeichnet, dass** eine lichtreflektierende Fläche die Bodenplatte eines Lichtkastens ausbildet, der die LED(s), Streufolie(n) und gegebenenfalls Diffuserfolie(n) aufnimmt.

**8.** Beleuchtungseinheit gemäß wenigstens einem der Ansprüche 1 bis 7, **dadurch gekennzeichnet, dass** die Streufolie(n) jeweils eine Dicke von 50 bis 1000 $\mu$m, bevorzugt von 50 bis 700 $\mu$m, besonders bevorzugt von 100 bis

600 μm, ganz besonders bevorzugt von 250 bis 500 μm aufweist.

9. Beleuchtungseinheit gemäß wenigstens einem der Ansprüche 1 bis 8, **dadurch gekennzeichnet, dass** die lichtlenkenden Strukturen translationsinvariant sind.

10. Beleuchtungseinheit gemäß wenigstens einem der Ansprüche 1 bis 9, **dadurch gekennzeichnet, dass** die Streufolie in der translationsinvarianten Richtung übermodulierte Strukturen aufweist, die eine zusätzliche Streuwirkung erzielen.

11. Beleuchtungseinheit gemäß wenigstens einem der Ansprüche 1 bis 10, **dadurch gekennzeichnet, dass** wenigstens zwei der Streufolien enthalten sind, welche jeweils auf der Vorderseite lichtlenkende Strukturen bestehend aus einem Linsenbereich und einem konvexen CPC-Bereich aufweisen, wobei die zweite Streufolie mit der Rückseite vor der Vorderseite der ersten Streufolie angeordnet ist und die lichtlenkenden Strukturen der zweiten Streufolie gegenüber der lichtlenkenden Strukturen der ersten Streufolie um einen Winkel zwischen 30 und 150°, besonders bevorzugt zwischen 60 und 120°, ganz besonders bevorzugt um 90° gedreht angeordnet sind.

**Fig. 1**

**Fig. 2**

**Fig. 3**

**Fig. 4a**

**Fig. 4b**

**Fig. 4c**

Fig. 5a

Fig. 5b

Fig. 5c

Fig. 6a

Fig. 6b

Fig. 6c

EP 2 312 383 A1

Europäisches
Patentamt

European
Patent Office

Office européen
des brevets

**EUROPÄISCHER RECHERCHENBERICHT**

Nummer der Anmeldung

EP 10 18 6954

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br>Y | WO 2009/010207 A2 (BAYER MATERIALSCIENCE AG [DE]; WALZE GUENTHER [DE]; STOLLWERCK GUNTHER) 22. Januar 2009 (2009-01-22)<br>* das ganze Dokument *<br>----- | 1-10<br><br>11 | INV.<br>G02F1/13357<br>G02B5/02<br>G02B27/09<br>G02B27/00 |
| Y | US 2005/259198 A1 (NEIL D. LUBART [US] ET AL) 24. November 2005 (2005-11-24)<br>* Absatz [0069] - Absatz [0071] *<br>* Abbildung 12 *<br>----- | 11 | |
| Y | US 2008/068716 A1 (GOTO MASAHIRO [JP]) 20. März 2008 (2008-03-20)<br>* Abbildungen 1,7 *<br>* Absatz [0046] - Absatz [0054] *<br>----- | 11 | |

| RECHERCHIERTE SACHGEBIETE (IPC) |
|---|
| G02F<br>G02B |

Der vorliegende Recherchenbericht wurde für alle Patentansprüche erstellt

| Recherchenort | Abschlußdatum der Recherche | Prüfer |
|---|---|---|
| München | 6. Dezember 2010 | von Hentig, Roger |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

EPO FORM 1503 03.82 (P04C03)

15

**ANHANG ZUM EUROPÄISCHEN RECHERCHENBERICHT**
**ÜBER DIE EUROPÄISCHE PATENTANMELDUNG NR.**

EP 10 18 6954

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-12-2010

| Im Recherchenbericht angeführtes Patentdokument | Datum der Veröffentlichung | Mitglied(er) der Patentfamilie | Datum der Veröffentlichung |
|---|---|---|---|
| WO 2009010207 A2 | 22-01-2009 | CN 101743509 A | 16-06-2010 |
| | | DE 102007033300 A1 | 29-01-2009 |
| | | EP 2171532 A2 | 07-04-2010 |
| | | JP 2010533881 T | 28-10-2010 |
| | | KR 20100049026 A | 11-05-2010 |
| | | US 2009073567 A1 | 19-03-2009 |
| US 2005259198 A1 | 24-11-2005 | AU 2005272937 A1 | 23-02-2006 |
| | | BR PI0514223 A | 03-06-2008 |
| | | CA 2579439 A1 | 23-02-2006 |
| | | CN 101091133 A | 19-12-2007 |
| | | EP 1782118 A2 | 09-05-2007 |
| | | JP 2008510183 T | 03-04-2008 |
| | | KR 20070110245 A | 16-11-2007 |
| | | WO 2006020610 A2 | 23-02-2006 |
| US 2008068716 A1 | 20-03-2008 | JP 4499519 B2 | 07-07-2010 |
| | | JP 2006053507 A | 23-02-2006 |
| | | WO 2006006558 A1 | 19-01-2006 |
| | | KR 20070038102 A | 09-04-2007 |
| | | TW 269106 B | 21-12-2006 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 634445 A
- US 20040066645 A
- DE 102005039413 A
- JP 2006284697 A
- US 200610262666 A
- CN 1924620 A
- US 2007047260 A
- US 2006250819 A
- DE 102007033300 A